(19) Europäisches Patentamt
European Patent Office
Office européen des brevets

(11) Veröffentlichungsnummer: **0 167 787**
**A2**

(12) # EUROPÄISCHE PATENTANMELDUNG

(21) Anmeldenummer: 85106712.4

(22) Anmeldetag: 31.05.85

(51) Int. Cl.[4]: C 09 D 3/58
C 09 D 3/64, C 09 D 3/80
C 08 G 18/70, C 08 G 73/00
C 08 G 59/40, C 08 G 71/00
C 08 G 63/76, C 08 F 8/30

(30) Priorität: 08.06.84 DE 3421294

(43) Veröffentlichungstag der Anmeldung: 15.01.86 Patentblatt 86/3

(84) Benannte Vertragsstaaten: AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Brindöpke, Gerhard, Dr.
Loreleistrasse 18
D-6230 Frankfurt am Main 80(DE)

Der weitere Erfinder hat auf seine Nennung verzichtet

(54) **Feinteiliges Überzugsmittel und dessen Verwendung.**

(57) Überzugsmittel in feiner Verteilung auf der Basis von A) OH-Gruppen enthaltenden Oligomeren und/oder Polymeren und B) verkappten Polyisocyanaten und gegebenenfalls weiteren üblichen Zusätzen, in dem die Komponente B) mindestens ein Acylurethan mit Gruppierungen der Formel $-CO-NH-CO-XR^1$ (I) enthält, worin X Sauerstoff oder Stickstoff, $R^1$, falls X Sauerstoff ist, Alky, Alkoxyalkyl, Hydroxyalkyl, Aryl, Aralkyl, oder Cycloalkyl und, falls X Stickstoff ist, der Rest $XR^1$ die Gruppierung

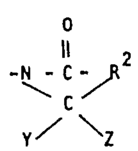

(II)

darstellt, worin $R^2$ $C_{1-11}$-Alkylen, -Alkenylen, unsubstituiertes oder mit Alkyl substituiertes Phenylen mit bis zu 8 C-Atomen im Alkylrest, Y und Z zusammen ein O-Atom bilden oder jeweils gleich oder verschieden sind und Wasserstoff oder $C_{1-6}$-Alkyl bedeuten, und daß das Überzugsmittel in Pulverform oder in Form einer Dispersion vorliegt. Das Überzugsmittel wird zum Beschichten von der Witterung ausgesetzten Gegenständen sowie als Decklacke und Grundierungen verwendet.

Croydon Printing Company Ltd

Feinteiliges Überzugsmittel und dessen Verwendung

Es wurde schon beschrieben, Pulverlacke mit guter Lagerstabilität aus OH-Gruppen enthaltenden Epoxidharzen und mit ε-Caprolactam verkappten Isophoron-Diisocyanat-Addukten herzustellen (DE-OS 29 45 113).

Eine andere Druckschrift beschreibt die Verwendung von verkappten Polyisocyanaten mit hoher Reaktionsfähigkeit, hergestellt durch Umsetzung von ε -Caprolactam mit Addukten aus Isophoron-diisocyanat und Polyolen zusammen mit OH-Gruppen enthaltenden Polyestern, für die Herstellung von Pulverlacken (DE-OS 30 04 876).

Wie der einen Druckschrift zu entnehmen ist, hat mit ε-Caprolactam verkapptes Isophoron-diisocyanat den Nachteil, daß ein daraus hergestelles Pulver beim Lagern zusammenbackt.

Nach DE-PS 2 547 124 werden wärmehärtbare Harzmischungen auf der Basis eines gesättigten, OH-Gruppen enthaltenden Polyesters und einer Polyacyl-N-Verbindung, z.B. Sebacoyl-bis-caprolactam vorgeschlagen, die zu Pulverbeschichtungen dienen.

Keine der vorstehend genannten Caprolactam-Verbindungen enthält jedoch die Gruppierung -CO-NH-CO-.

Andererseits ist es bekannt, Acyl- und Aroylcarbamate durch Umsetzung von Carbamaten mit Acyl- oder Aroylhalogeniden von Monocarbonsäuren in Gegenwart von Metallen und Metallverbindungen herzustellen (DE-AS 22 25 247). Über die Verwendung der Produkte ist nichts ausgesagt.

Nach einer weiteren Veröffentlichung dienen Acylurethane mit der Gruppierung $-CO-NH-COOR^2$, worin $R^2$ Alkyl, Cycloalkyl, Aryl oder Aralkyl bedeutet, und die aus Urethanen und Säurechloriden ein- bis dreiwertiger Carbonsäuren hergestellt worden sind, als Acylierungsmittel für Hydroxy- und Aminoverbindungen (DE-PS 1 081 460).

In dieser Druckschrift wird erwähnt, daß sich das Verfahren der Acylierung zur Verwendung in der Chemie der Kunststoffe, der Textilveredelung und der Lacke eignet bzw. daß der Einsatz der vernetzten Harze als Ionenaustauscher erfolgen kann. Im Zusammenhang mit Lacken ist dort nichts Näheres angegeben; es wird lediglich ausgeführt, daß die meisten der beschriebenen acylierten Urethane in den üblichen organischen, namentlich den in der Lackindustrie bevorzugten Lösungsmitteln löslich seien. Über die Verwendung der acylierten Urethane in Pulverlacken und/oder Pasten wird aber in der Veröffentlichung nichts gesagt, obwohl bekannt ist, daß für diesen Einsatzbereich die Komponenten eigenen Gesetzesmäßigkeiten unterliegen.

Es war nun erwünscht, ein Überzugsmittel für den Einsatz in Pulverlacken und Pasten bzw. Dispersionen mit feiner Verteilung herzustellen, das die genannten Schwierigkeiten vermeidet, einerseits eine hohe Reaktivität besitzt, andererseits aber bei seiner Herstellung kurzfristig Temperaturen von 100 bis 120°C ausgesetzt werden kann, ohne daß eine unerwünschte Vernetzung eintritt und das trotzdem eine ausgezeichnete Lagerbeständigkeit von mehreren Wochen und Monaten aufweist.

Gegenstand der Erfindung ist daher ein Überzugsmittel in

feiner Verteilung auf der Basis von

A) OH-Gruppen enthaltenden Oligomeren und/oder Polymeren und

B) verkappten Polyisocyanaten,
welches dadurch gekennzeichnet ist, daß die Komponente B) mindestens ein Acylurethan mit Gruppierungen der Formel $-CO-NH-CO-XR^1$ (I) enthält, worin

X Sauerstoff oder Stickstoff,

$R^1$, falls X Sauerstoff ist, Alkyl, Alkoxyalkyl, Hydroxyalkyl, Aryl, Aralkyl oder Cycloalkyl mit 1 bis 12, vorzugsweise 1 bis 8 C-Atomen in der Alkylgruppe und, falls X Stickstoff ist, der Rest $XR^1$ die Gruppierung

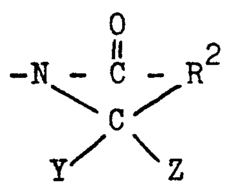

(II)

darstellt, worin

$R^2$ $C_{1-11}$-, vorzugsweise $C_{1-8}$-Alkylen, -Alkenylen, unsubstituiertes oder mit Alkyl substituiertes Phenylen mit bis zu 8 C-Atomen im Alkylrest,

Y und Z zusammen ein O-Atom bilden oder jeweils gleich oder verschieden sind und Wasserstoff oder $C_{1-5}$-Alkyl

bedeuten, und

daß das Überzugsmittel in Pulverform oder in Form einer Dispersion vorliegt.

Falls Y und Z eine andere Bedeutung als Sauerstoff haben, ist $R^2$ in der Regel ein $C_{1-11}$-Alkylen, vorzugsweise mit mindestens 2 C-Atomen.

Das erfindungsgemäße Überzugsmittel ermöglicht eine sichere Verarbeitung. So läßt sich z.B. das Vermischen der Komponenten A) und B) bei erhöhter Temperatur durchführen, ohne daß eine vorzeitige unerwünschte Vernetzungsreaktion einsetzt. Es ist also durchaus möglich, das Komponentengemisch Temperaturen bis zu ca. 150°C, beispielsweise 100 bis 120°C auszusetzen, ohne daß eine Vernetzung eintritt. Allerdings ist die Anwendung von höheren Temperaturen abhängig von der Verwendung der eingesetzten Apparatur und der Verweilzeit. Außerdem läßt sich das Gemisch ohne Beeinträchigung seiner Reaktionsfähigkeit bei Raumtemperatur über einen Zeitraum von meheren Monaten, lagern. Ein Zusammenbacken tritt nicht ein. Andererseits härtet das Gemisch überraschenderweise bei verhältnismäßig niedrigen Temperaturen unter Bildung eines glatten, einwandfrei verlaufenden Überzuges. Diese Reaktivität ist vor allem durch die Acylurethangruppierung der Formel I bedingt, die eine doppelte Aktivierung mit sich bringt.

Vorzugsweise enthält die Komponente A) mindestens ein Oligomeres und/oder Polymeres der Gruppe Polyester, Polyacrylverbindungen und Polyepoxide. Es ist aber auch möglich, als OH-Gruppen enthaltende Komponente Polyether, Polythioether, Polyacetale, Polyesteramide, Phenolharze, Aminharze und deren Modifizierungsprodukte mit polyfunktionellen Alkoholen, z.B. Melamin- oder Harnstoffharze, Thioharnstoffharze; Polyurethane, Polysulfonamide, Celluloseester und -ether, teilweise verseifte Homo- und Copolymerisate von Vinylestern, teilweise acetalisierte Polyvinylalkohole und dergleichen einzusetzen. Diese Hydroxylgruppen enthaltenden Polymere bzw. Oligomere können beispielsweise Schmelzpunkte von 65 bis 130, vorzugsweise 75 bis 100°C besitzen. In manchen Fällen können die Schmelzpunkte auch höher liegen. Es ist auch möglich, Gemische der erwähnten Verbindungen einzusetzen, falls diese miteinander verträglich sind, z.B. Gemische von Polyestern und Epoxidharzen.

Als Polyester kommen die bekannten und handelsüblichen gesättigten und/oder ungesättigten, gegebenenfalls durch Halogenide substituierten Polyester in Frage, ferner auch Polyester mit cycloaliphatischen und aromatischen Bestandteilen oder Polyester, die gegebenenfalls Ethergruppen und/oder monofunktionelle Komponenten, z.B. Monocarbonsäuren oder einwertige Alkohole in untergeordnetem Teil enthalten, wie ölmodifizierte Polyester, z.B. in Form von Alkydharzen. Die Polyester haben im allgemeinen eine OH-Zahl von 30 bis 200, vorzugsweise 40 bis 150.

Als wesentliche Bestandteile der Polyester werden beispielsweise genannt

a) aliphatische und cyclische Polycarbonsäuren, gesättigt oder ethylenisch ungesättigt mit jeweils bis zu 15 C-Atomen, wie Adipinsäure, Sebacinsäure, Malein- und Fumarsäure bzw. deren Anhydride, sofern diese existieren, Phthalsäure, deren Tetra- und Hexahydroderivate, Isophthalsäure, Terephthalsäure, Trimellithsäure, Naphthalindicarbonsäure oder dergleichen;

b) mehrwertige Alkohole, wie Ethylenglykol, $C_{3-8}$-Diole, deren Oligomere, Cyclohexandiol, Glycerin, Neopentylglykol, Pentaerythrit, Trimethylolethan und -propan oder dergleichen.

Geeignete Polyepoxide, die ein Epoxyäquivalentgewicht von 450 bis 5000, vorzugsweise von 700 bis 2000 besitzen, sind beispielsweise feste Epoxidharze auf der Basis von Diphenylolpropan oder -methan und Epichlorhydrin oder Additionsprodukte anderer Epoxide, wie Ethylenoxid, Propylenoxid, Butylenoxid, Trimethylenoxid, Styroloxid oder dergleichen an mehrwertige Alkohole, Amine oder hydroxyalkylierte Phenole, sofern diese Polyepoxide noch freie OH-Gruppen aufweisen, ferner Glycidylester oder -ether mit freien OH-Gruppen, die z.B. aus Glycidylestern von gesättigten oder ethylenisch ungesättigten Carbonsäuren mit jeweils 3 bis 12 C-Atomen hergestellt sein können.

Geeignete Acrylharze sind z.B. Homo- und Copolymerisate von Hydroxyalkylacrylat und/oder -methacrylat, insbesondere mit Alkylacrylat und -methacrylat mit jeweils bis zu 8 C-Atomen im Alkylrest, Acryl- und Methacrylsäure, Acrylnitril, Methacrylnitril, Acrylamid, Methacrylamid, Styrol, Fumar-, Maleinsäureester, und anderen copolymerisierbaren Monomeren, gegebenenfalls jeweils einzeln oder im Gemisch. Diese Verbindungen besitzen ein mittleres Molekulargewicht von 800 bis 20000, vorzugsweise 1000 bis 15000 insbesondere 2000 bis 12000 und eine OH-Zahl von 50 bis 200 insbesondere 80 bis 160.

Vorzugsweise ist die als Vernetzer dienende Verbindung B) eine Verbindung der Formel

$R\text{-}(\text{-}CO\text{-}NH\text{-}CO\text{-}XR^1)_n$ (III),

worin

R den Kohlenwasserstoff-Rest einer gegebenenfalls α,ß-äthylenisch ungesättigten aliphatischen, araliphatischen oder carbocyclischen Polycarbonsäure mit 1 bis 20, vorzugsweise bis 12 C-Atomen, der gegebenenfalls Ester-, Ether, Thioether und/oder Amidgruppen enthalten kann, bedeutet,

$R^1$ und X die oben genannte Bedeutung haben, wobei X vorzugsweise Sauerstoff ist, und

n eine ganze Zahl von 2 bis 4, vorzugsweise 2

ist.

Als mehrbasische Säuren, die den Rest R bilden, werden beispielsweise aliphatische gesättigte oder α,ß-ethylenisch ungesättigte Säuren genannt wie Malonsäure, Bernsteinsäure, Adipinsäure, Korksäure, Sebacinsäure, Decan- und Dodecandicarbonsäure, Heteroatome enthaltende Säuren, wie Diglykolsäure; Malein- und Fumarsäure; aromatische Säuren, wie Phthalsäure, Terephthalsäure, Isophthalsäure, Trimellithsäure, Pyromellithsäure, Benzylidendicarbonsäure;

cycloaliphatische Säuren, wie Hexahydrophthalsäure, Tetrahydrophthalsäure und deren Endoalkylenderivate, Methylcyclohexentricarbonsäure; heterocyclische Säuren, wie Tri-N-ethylencarboxytriisocyanurat, jeweils einzeln oder im Gemisch. Im allgemeinen sind die aliphatischen Carbonsäuren bevorzugt. Unter Polycarbonsäuren sind auch solche Verbindungen zu verstehen, die Ester eines mehrwertigen Alkohols und einer Di- oder höherwertigen Carbonsäure darstellen und die noch mindestens zwei freie COOH-Gruppen aufweisen, beispielsweise der Ester aus 1 Mol Ethan- oder Hexandiol und 2 Mol Maleinsäure, Phthalsäure oder Bernsteinsäure. Der Rest R kann somit auch Estergruppen aber auch Ether, Thioether und/oder Amidgruppen enthalten. Es kann hierbei von Vorteil sein, daß die Härterkomponente B) einen Schmelzpunkt von mindestens 60, vorzugsweise mindestens 80° C hat, um eine einwandfreie Verarbeitung, z. B. Zerkleinerung der Masse, zu gewährleisten.

Es ist aber auch möglich, daß R den Rest eines Polycarbonsäureteilesters, der gegebenenfalls auch verethert sein kann, darstellt. Geeignete Teilester sind beispielsweise Alkyl- oder Alkoxyalkylester der für R genannten Säuren mit jeweils bis zu 12, vorzugsweise bis zu 6 C-Atome im Alkylrest.

Die Komponente B) läßt sich z.B. in an sich bekannter Weise oder nach dem in der deutschen Patentanmeldung P 34 21 293.0 ("Verfahren zur Herstellung von Acylurethanen und deren Verwendung", eingereicht am selben Tag) beschriebenen Verfahren herstellen.

Geeignete, den Rest $-XR^1$ in Formel (III) bildende Alkohole sind z.B. ein- oder mehrwertige Alkohole mit 1 bis 12 C-Atomen, wie Methanol, Ethanol, die Propan-, Butan-, Pentan-, Hexan-, Octan- und Decanole, deren Homologe und deren Methyl-, Ethyl-, Propyl- und Butylether bzw. deren Teilester z.B. mit bis zu 12 C-Atomen in der Säurekomponente oder dergleichen.

Die Reste $-XR^1$ werden beim Einbrennen abgespalten. Die Komponente B), in denen $XR^1$ ein Alkoholrest ist, sind gewöhnlich bevorzugt, weil sich diese Substanzen beim Einbrennvorgang besonders umweltfreundlich verhalten. In manchen Fällen kann es jedoch auch erwünscht sein, Verbindungen zu wählen, in denen X Stickstoff ist.

Diese Verbindungen, die somit den Rest $-NR^1$ aufweisen, also die Gruppierung der Formel (II) enthalten, wobei Y und Z Wasserstoff oder Alkyl bedeuten, sind vorzugsweise Pyrrolidon, Lauryllactam und ε-Caprolactam.

Nach einer weiteren Ausführungsform der Erfindung enthält die Komponente B) den Rest der Formel (II) worin Y und Z zusammen ein O-Atom bedeuten, so daß sich die Formel

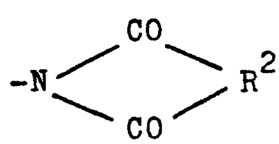

(IV)

ergibt. Beispiele für Verbindungen, die den Rest (IV) bilden, sind Imide, z.B. solche der Bernsteinsäure und Phthalsäure.

In manchen Fällen kann es auch erwünscht sein, wenn die erfindungsgemäßen Überzugsmittel neben den Polyacylurethanen zusätzlich noch Monoacylurethane enthalten, die in der Regel in untergeordneter Menge bis zu 20 bzw. 10 %, bezogen auf die Polyacylurethane, vorhanden sind. Mit diesen

monofunktionellen Verbindungen läßt sich z.B. die Vernetzungsdichte des Systems variieren. Vorzugsweise wird man von ihnen besonders bei Systemen mit hoher Vernetzungsdichte Gebrauch machen. In den meisten Fällen wird man jedoch nur Polyacylurethane allein einsetzen.

Im allgemeinen besitzt die Komponente B) einen Erweichungspunkt von 40 bis 240, vorzugsweise 80 bis 200°C. Mit der Auswahl des Erweichungspunktes lassen sich die Verarbeitungssicherheit des Gemisches, die Einbrenntemperatur und die physikalischen Eigenschaften des aufgebrachten Überzugs innerhalb bestimmter Grenzen steuern.

Das gegenseitige Mengenverhältnis der Komponenten A) und B) richtet sich im allgemeinen nach dem Anteil der OH-Gruppen der Komponente A) und der Anzahl der Acylurethangruppen der Formel I der Komponente B) pro OH-Gruppe. In der Regel wird man beispielsweise etwa im stöchiometrischen Verhältnis der Komponenten arbeiten, jedoch ist auch ein Überschuß der einen oder anderen Komponente möglich. Somit beträgt das Verhältnis der OH-Gruppe der Komponente A) zu der Zahl der Acylurethangruppen der Komponente B) im allgemeinen (0,5 bis 1,3) : 1 bis 1 : (0,5 bis 1,3), vorzugsweise (0,8 bis 1) : 1 bis 1 : (0,8 bis 1).

Vorzugsweise enthält das erfindungsgemäße Überzugsmittel zusätzlich einen geringen Anteil an Benzoin und/oder dessen o-, m- oder p-Alkylsubstitutionsprodukten mit bis zu 8 C-Atomen in der Alkylgruppe, vorzugsweise jedoch Benzoin selbst. Der Anteil der Benzoin-Verbindung beträgt im allgemeinen 0,1 bis 10, vorzugsweise 0,2 bis 5 Gew.-%,

bezogen auf den Festkörpergehalt des Gemischs. Die Anwesenheit der Komponente B) zusammen mit dieser die Bläschen- und Porenbildung hemmenden Substanz trägt überraschenderweise zur Ausbildung einer besonders glatten, deutlich verbesserten Oberfläche der Überzüge, verglichen mit den aus bekannten Pulverlacken hergestellten Überzügen, bei. Diese überraschende und vorteilhafte Wirkung ist vor allem durch die günstigen Verlaufseigenschaften bei der Vernetzungsreaktion zwischen den OH-Gruppen und dem Acylurethan beim Einbrennen bedingt. Innerhalb bestimmter Grenzen lassen sich die Verlaufseigenschaften mit der Kettenlänge der Komponente B) variieren. Infolge des günstigen Verlaufs und der guten Pigmentbenetzung können mit den erfindungsgemäßen Überzugsmitteln verhältnismäßig dünne Überzüge hergestellt werden, wobei immer noch ein ausreichendes Deckvermögen gegeben ist. Es ergibt sich somit überraschenderweise eine erhebliche Materialersparnis.

Da die Komponente B) der erfindungsgemäßen Überzugsmittel vorwiegend Urethangruppen enthält, werden beim Einbrennen nur Verbindungen mit alkoholischen Gruppen frei, so daß sich dieser Vorgang im allgemeinen umweltfreundlich gestaltet. Es tritt somit weder eine Belastung der Umwelt ein noch können sich irgendwelche Substanzen in den Verarbeitungsvorrichtungen niederschlagen.

Außer den genannten Komponenten können die erfindungsgemäßen Überzugsmittel weitere übliche Zusätze, wie Katalysatoren, Pigmente, Füllstoffe, Verlaufmittel, Netzmittel Glanzmittel, Stabilisatoren oder dergleichen, jeweils einzeln oder im Gemisch, enthalten.

Als Verlaufmittel werden beispielsweise Polyacrylate, wie

Poly-n-butylacrylat, Poly-2-ethylhexylacrylat und Celluloseacetobutyrat genannt.

Gegebenenfalls kann, um besonders niedrige Temperaturen bei der Härtung anzuwenden, mindestens ein Härtungskatalysator der Gruppe Sulfonsäuren, wie p-Toluolsulfonsäure, Naphthalin-1,4-disulfonsäure, quartäre Ammoniumsalze, wie Tetrabutylammoniumbromid, das entsprechende Chlorid und Jodid, Aminohydrochloride, wie Dimethylanilin-Hydrochlorid, Metallsalze organischer Säuren, wie Zinknaphthenate, Cobaltnaphthenat, Dibutylzinndilaurat, Lithiumbenzoat, Metallalkoholate, z.B. solche von Titan, Vanadium, Zirkonium sowie ihre Koordinationskomplexe wie Acetylacetonat, Ethylacetoacetat u.a., ferner Alkaliverbindungen, wie Hydroxide des Lithiums, Natriums und Kaliums und Alkalisalze, wie Lithiumchlorid anwesend sein.

Diese Katalysatoren werden im allgemeinen in einem Anteil von 0,01 bis 5, vorzugsweise 0,1 bis 0,5 Gew.-%, bezogen auf den Gesamtfestkörpergehalt der Mischung eingesetzt.

Beispiele für verwendbare Pigmente sind Titandioxid, Eisenoxid und Ruß. Als Füllstoffe eignen sich unter anderem Calciumcarbonat und Bariumsulfat.

Zur Herstellung der erfindungsgemäßen Überzugsmittel werden die dafür erforderlichen Bestandteile vermischt und das Gemisch auf übliche Weise in einer an sich bekannten Zerkleinerungsvorrichtung zerkleinert. Je nach der gewünschten Form des Überzugsmittels, nämlich als Pulver oder Dispersion, wird man verschiedene Verfahren anwenden.

Will man beispielsweise ein pulverförmiges Überzugsmittel herstellen, so kann man das Gemisch z.B. in einem üblichen heizbaren Extruder bei erhöhter Temperatur, beispielsweise

bei 100 bis 120°C vermischen und extrudieren. Das Pulverisieren kann z.B. durch Mahlen in einer Hammer-, Stift-, Luftstrahl- oder Sichtermühle oder dergleichen erfolgen.

Ist hingegen ein Überzugsmittel in Form einer Dispersion erwünscht, so wird man beim Zerkleinern z.B. von Schwing- oder Prallteller-Mühlen oder dergleichen Gebrauch machen, wobei gegebenenfalls auch eine Naßvermahlung auf entsprechenden Aggregaten erfolgen kann, um die Temperatur möglichst niedrig zu halten. Dabei wird als flüssige Phase vorzugsweise Wasser eingesetzt.

Zur Herstellung einer Dispersion müssen die Komponenten, insbesondere Komponenten A) und B) hydrophob sein, um unerwünschte Vorreaktionen zu vermeiden, die in teilweise wasserlöslichen Systemen auftreten können und zu Störungen führen. Das Überzugsmittel wird bei Anwendung in Dispersionen entweder in Wasser oder einem wasserlöslichen Bindemittel, wie Polyester oder dessen Umsetzungsprodukten mit Ölen, die z.B. Carboxylgruppen besitzen und anschließend mit Aminogruppen enthaltenden Verbindungen wasserlöslich gemacht werden können, homogenisiert. Der Festkörpergehalt einer solchen Dispersion beträgt im allgemeinen 1 bis 80, vorzugsweise 10 - 75 Gew.-%.

Zur Herstellung von Pulverlacken wird im allgemeinen das Mahlgut gesiebt und die Teilchen mit einer Korngröße von weniger als 120 µm abgetrennt. Die Korngröße vom Pulverlack beträgt somit bis zu 120 µm, vorzugsweise bis zu 90 µm und insbesondere 30 bis 50 µm. Bei Überzugsmitteln in Form von einer Dispersion liegt die Teilchengröße ebenfalls bei maximal 120 µm, vorzugsweise bei höchstens 15, insbesondere höchstens 5 µm. Das gewonnene Pulver ist ausgezeichnet lagerfähig und klumpt selbst bei monatelanger Lagerung bei Temperaturen bis 40°C nicht und zeigt beim Erhitzen auf 120°C noch keinerlei Tendenz zum Vernetzen.

Das Aufbringen des Überzugsmittels auf eine Unterlage erfolgt in an sich bekannter Weise durch stromlose Auftragsverfahren, wie Spritzen, Tauchen, Fluten, Walzen (Coil-Coating) oder nach dem elektrostatischen Sprühverfahren, insbesondere auf Metallteile, beispielsweise Eisen oder Aluminiumblech. Hierbei hat beispielsweise eine Dispersion 20 bis 80, vorzugsweise 40 bis 75 Gew.-% Festkörperanteil.

Falls das erfindungsgemäße Überzugsmittel in Form einer Dispersion aufgebracht werden soll, wird man vorzugsweise nach dem kataphoretischen Abscheidungsverfahren (Electrophoretic Powder Coating) arbeiten, wie es beispielsweise im Europa Patent 00 43 104 beschrieben ist. Bei der Elektrotauchlackierung arbeitet man gewöhnlich im wäßrigen Bad, wobei das Substrat als Kathode geschaltet ist.

Das Aufbringen der Überzugsmittel kann zum Beispiel auf chemisch vorbehandelte bzw. entfettete, nicht grundierte bzw. grundierte Metalle erfolgen, ferner auch auf Glas und Keramik.

Der Feststoffgehalt und der pH-Wert der Dispersion werden auf den gewünschten Wert eingestellt, wobei der pH-Wert abhängig von der Polarität der elektrochemischen Auftragsart ist. Im allgemeinen beträgt der Festkörpergehalt des Bades bei dem Elektrotauchverfahren 1 bis 30, vorzugsweise 10 bis 15 Gew.-%. Er kann jedoch auch höher liegen. Die Elektrotauchlackierung wird z.B. so lange durchgeführt, bis ein Film der gewünschten Dicke auf dem als Gegenpol dienenden Werkstück abgeschieden worden ist. Anschließend wird das beschichtete Werkstück dem Bad entnommen, mit Wasser gespült und dann in üblicher Weise eingebrannt.

Die erfindungsgemäßen Überzugsmittel lassen sich nach den verschiedenen Verfahren im allgemeinen mit einer Schichtdicke von mindestens 5, vorzugsweise von 30 bis 100, insbesondere 40 bis 60 µm aufbringen. In manchen Fällen sind jedoch auch etwa 200 µm oder mehr erzielbar.

Von den genannten Auftragsverfahren sind das elektrostatische Sprühverfahren, Walzen (Coil-Coating) und die Elektrotauchlackierung bevorzugt.

Die Einbrenntemperatur des Überzugsmittels liegt in der Regel bei 140 bis 300, vorzugsweise 150 bis 200, insbesondere bei 160 bis 180°C, wobei die Temperatur abhängig ist von der Einbrenndauer. So erfordert beispielsweise eine niedrige Temperatur eine Erhöhung der Einbrenndauer, während diese bei hohen Temperaturen außergewöhnlich kurz sein kann. Die Maximaltemperaturen von 300°C werden vor allem bei Walzverfahren (Coil-Coating) kurzzeitig erreicht, ohne daß sie sich nachteilig auf die Eigenschaften der erhaltenen Überzüge auswirken. Auch nach diesem Verfahren erhält man einwandfreie Oberflächen. In einzelnen Fällen kann das beschichtete Werkstück auch einige Minuten auf eine Temperatur von 50 bis 100°C vorgewärmt werden. In der Regel ist dies jedoch aufgrund der ausgezeichneten Härtungseigenschaften der erfindungsgemäßen Überzugsmittel nicht erforderlich.

Die umweltfreundlichen Spaltprodukte beim Einbrennen und die ausgezeichnete Haftung der Überzüge auf der Unterlage bringen gegenüber den bisher bekannten Verfahren eine überraschende Wirkung und einen wesentlichen technischen Fortschritt mit sich.

Außerdem zeigt der Verlauf der vorliegenden Überzugsmittel im Vergleich zu den bekannten Pulverlacksystemen, sogar gegenüber solchen auf Polyurethanbasis, eine wesentliche Verbesserung. Ein weiterer Vorteil der erfindungsgemäßen

Überzugsmittel liegt darin, daß sie, z.B. im Unterschied zu Epoxidharzen und Epoxidharz-Polyester-Systemen, außerordentlich licht- und wärmebeständig sind, auch gegenüber Bestrahlung von kurzwelligem Licht. In Kombinationen mit Polyester und/oder Acrylharzen erhält man selbst nach 2000 Stunden langer Erwärmung auf 100°C überraschenderweise keine Vergilbung.

Die erfindungsgemäßen Überzugsmittel finden wegen ihrer günstigen Eigenschaften vielseitige Verwendung auf den verschiedenen Substraten wie Metall, Holz, Kunststoffen, Glas u.a., z.B. zum Beschichten von der Witterung ausgesetzten Gegenständen, wie Fassadenverkleidungen, Fensterrahmen, Metallprofile, Campingmöbel, als Decklacke und Grundierungen für Nutzfahrzeuge, wie Autos, Landmaschinen, Motorradkarrossen, für Haushaltsgeräte, wie Kühlschränke, Waschmaschinen, Elektroherde oder dergleichen.

In den nachstehenden Versuchen und Beispielen bedeuten T Gew.-Teile und % jeweils Gew.-%.

Beispiele

I. Komponente A

a) Polyester

Die in Tabelle 1 aufgeführten Polyester-Komponenten A) sind jeweils Polyester mit unterschiedlicher Zusammensetzung und OH-Zahl.

1. Ölfreier, gesättigter, Hydroxylgruppen enthaltender Polyester mit einer OH-Zahl von 50, bekannt unter der Handelsbezeichnung "Alftalat(R) AN 739".

2. Gesättigter, Hydroxylgruppen enthaltender Polyester mit einer OH-Zahl von 110, bekannt unter der Handelsbezeichnung "Alftalat VAN 1242".

Die Polyester I bis III sind jeweils Mischungen der genannten Handelsprodukte mit unterschiedlicher OH-Zahl.

Polyester I - OH-Zahl 55,
Polyester II - OH-Zahl 70,
Polyester III - OH-Zahl 100.

b) Polyacrylatharz

Als weitere Verbindung der Komponente A wurde ein durch Substanzpolymerisation von Dimethylmaleinat, Styrol, Methylmethacrylat und 2-Hydroxyethylmethacrylat bei 170°C hergestelltes Polylacrylatharz mit folgenden Kenndaten eingesetzt: OH-Zahl 140, Schmelzviskosität 160°C: 13 000 mPa.s.

II. Herstellung der Komponente B

1. 80 T Decandicarbonsäuredichlorid und 55 T Carbamidsäureethylester wurden in 300 T Dichlorethan mit 2 T Zinkchlorid 6 h unter Rückfluß erhitzt. Nach Abkühlung auf Raumtemperatur wurde der Niederschlag abgesaugt und mit 100 T Diethylether gewaschen. Ausbeute: 94,4 T einer kristallinen weißen Verbindung, Schmelzpunkt 154°C.

2. 24 T Sebacinsäuredichlorid und 25 T Carbamidsäure-2-methoxy-ethylester wurden analog Versuch 1 in 300 T Benzin (Siedebereich 60 bis 90°C) mit 1 T Zinkchlorid umgesetzt. Ausbeute: 34 T eines weißen kristallinen Pulvers, Schmelzpunkt 130°C.

3. 24 T Sebacinsäuredichlorid und 19 T Carbamidsäureethylester wurden analog Versuch 1 in 300 ml Benzin mit 1,5 T p-Toluolsulfonsäure umgesetzt. Ausbeute: 33 T eines weißen Pulvers, Schmelzpunkt 155°C.

4. 183 T Adipinsäuredichlorid und 244 T Carbamidsäure-2-methoxyethylester wurden analog Versuch 1 in 1 l Dichlorethan mit 5 T Zinkchlorid umgesetzt. Ausbeute: 330 T eines weißen Pulvers, Schmelzpunkt 174°C.

5. 18,3 T Adipinsäuredichlorid und 36 T Carbamidsäure-2-ethylhexylester wurden analog Versuch 1 in 250 T Benzin mit 2 T p-Toluolsulfonsäure umgesetzt. Ausbeute 37 T einer Verbindung, Schmelzpunkt 105°C.

6. 31 T Ethylenglykol, 100 T Bernsteinsäureanhydrid und 0,5 T Triethylamin wurden auf 80°C erhitzt. Bei 80°C wurde bis zum Erreichen der theoretischen Säurezahl von 430 nachgerührt und auf 50°C abgekühlt. Anschließend wurden innerhalb 1 1/2 h 134 T Thionylchlorid zugetropft und bis zum Ende der Gasentwicklung nachgerührt. Bei Raumtemperatur wurde dann mit 600 T Dichlormethan, 130 T Carbamidsäuremethylester und 3 T Zinkchlorid versetzt, für 6 h unter Rückfluß erhitzt und nach dem Abkühlen der Niederschlag abgesaugt. Ausbeute: 110 T eines weißen kristallinen Pulvers, Schmelzpunkt 184°C.

<u>Vergleichskomponente BV</u>

Als Vergleichssubstanz diente ein handelsübliches mit ε-Caprolactam verkapptes Isophorondiisocyanat, Schmelzpunkt 90 bis 110°C, verkappte Isocyanatgruppen 14 %, freie Isocyanatgruppen 0,5 %.

III. Beispiele 1 bis 8 und Vergleichsversuche V 1 bis V 3

Tabelle 1 gibt einen Überblick über den Aufbau verschiedener Beispiele der erfindungsgemäßen pulverförmigen Überzugsmittel nach OH-Zahlen der Komponenten A) geordnet. Die angegebenen Zahlenwerte sind jeweils Gewichtsteile der eingesetzten Substanzen.

Die Vergleichsversuche V 1 bis V 3 wurden mit der oben erwähnten Vergleichskomponente B V sowie mit einem der Polyester I bis III durchgeführt. Vergleichsversuch V 4 wurde mit derselben Polyacrylverbindung wie Beispiel 8 und der Vergleichskomponente B V durchgeführt.

IV. Lacktechnische Prüfung

Tabellen 2 und 3 zeigen die physikalischen Werte der unter verschiedenen Einbrennbedingungen erhaltenen Überzüge gemäß Tabelle 1. Die Werte gemäß Tabelle 2 wurden nach 20 min Härtung bei 170°C und diejenigen von Tabelle 3 nach einer Härtung von 15 min bei 180°C gewonnen. Die Schlagprüfung erfolgte nach ASTM D 2794-69. Die Werte für den Verlauf wurden durch visuelle Prüfung ermittelt, wobei 0 = bester Wert und 5 = schlechtester Wert bedeuten (DIN 53 230).

Tabelle 1

| OH-Zahl | 55 | | | | 70 | | | 100 | | | 140 | |
|---|---|---|---|---|---|---|---|---|---|---|---|---|
| Beispiel bzw. Vergleich V | 1 | 2 | 3 | V 1 | 4 | 5 | V 2 | 6 | 7 | V 3 | 8 | V |
| Komponente A: | | | | | | | | | | | | |
| " " 1 | 515 | 509 | 521 | 471 | 365 | 354 | 323 | 83 | 84 | 72 | – | – |
| " " 2 | 47 | 46 | 47 | 43 | 182 | 177 | 161 | 416 | 423 | 361 | – | – |
| Polyester I* | 562 | 555 | 568 | 514 | – | – | – | – | – | – | – | – |
| Polyester II* | – | – | – | – | 547 | 531 | 484 | – | – | – | – | – |
| Polyester III* | – | – | – | – | – | – | – | 493 | 501 | 433 | – | – |
| ( ) | – | – | – | – | – | – | – | – | – | – | 431 | 369 |
| Komponente B: | | | | | | | | | | | | |
| " " 1 | 103 | – | – | – | – | – | – | 166 | – | – | – | – |
| " " 2 | – | 110 | – | – | – | 134 | – | – | – | – | 214 | – |
| " " 3 | – | – | – | – | 118 | – | – | – | – | – | – | – |
| " " 4 | – | – | 97 | – | – | – | – | – | 158 | – | – | – |
| Vergleich B V | – | – | – | 151 | – | – | 181 | – | – | 232 | – | 276 |
| Titandioxid | 300 | 300 | 300 | 300 | 300 | 300 | 300 | 300 | 300 | 300 | 350 | 350 |
| Verlaufmittel (Polyacrylat) | 30 | 30 | 30 | 30 | 30 | 30 | 30 | 30 | 30 | 30 | – | – |
| Benzoin | 5 | 5 | 5 | 5 | 5 | 5 | 5 | 5 | 5 | 5 | 5 | 5 |
| | 1000 | 1000 | 1000 | 1000 | 1000 | 1000 | 1000 | 1000 | 1000 | 1000 | 1000 | 1000 |

* Die Zahlen der Polyester entsprechen der Summe aus den beiden zuvor genannten Alftalat-Typen.

Tabelle 2

Härtung 20 min/ 170°C (Eisenblech, zinkphosphatiert)

| Beispiel bzw. Vergleich V | 1 | 2 | 3 | V 1 | 4 | 5 | V 2 | 6 | 7 | V 3 | 8 | V |
|---|---|---|---|---|---|---|---|---|---|---|---|---|
| Erichsentiefung mm | 11 | 10,5 | 10 | 3 | 11 | 11 | 10 | 10 | 11 | 10 | 9 | < 1 |
| Schlagprüfung (reverse) inch. pound | >100 | >100 | >100 | <20 | >100 | >100 | <20 | >100 | >100 | <20 | 24 | <10 |
| Schichtdicke µm | 45 | 40 | 45 | 40 | 45 | 60 | 55 | 50 | 50 | 55 | 60 | 55 |
| Glanz nach Lange (60°C) | 91 | 89 | 90 | 50 | 99 | 100 | 92 | 85 | 82 | 60 | 103 | 90 |
| Verlauf | 1 | 1,5 | 1,5 | 2,5 | 1,5 | 1,5 | 2,5 | 1,5 | 2 | 3 | 1 | 2,5 |

Tabelle 3

Härtung 15 min/ 180°C (Eisenblech, zinkphosphatiert)

| Beispiel bzw. Vergleich V | 1 | 2 | 3 | V 1 | 4 | 5 | V 2 | 6 | 7 | V 3 | 8 | V |
|---|---|---|---|---|---|---|---|---|---|---|---|---|
| Erichsentiefung mm | 10,4 | 10,8 | 11 | 10,1 | 11 | 11 | 10,8 | 10,5 | 10,8 | 11 | 9,2 | 1,8 |
| Schlagprüfung (reverse) inch. pound | >100 | >100 | >100 | 40 | >100 | >100 | 48 | >100 | >100 | 60 | 24 | <10 |
| Schichtdicke µm | 50 | 45 | 50 | 55 | 60 | 55 | 55 | 50 | 55 | 55 | 55 | 55 |
| Glanz nach Lange (60°C) | 87 | 88 | 85 | 83 | 100 | 100 | 92 | 90 | 70 | 55 | 101 | 89 |
| Verlauf | 1 | 1 | 1,5 | 2,5 | 1 | 1,5 | 2,5 | 1,5 | 2 | 2,5 | 1 | 2,5 |

## V. Diskussion der Ergebnisse

Wie aus den Werten für die Erichsentiefung und Schlagprüfung hervorgeht, tritt bei allen Beispielen gemäß der Erfindung die Vernetzung der Überzüge relativ früh ein, d.h. die notwendigen mechanischen Eigenschaften werden überraschenderweise bei verhältnismäßig niedrigen Temperaturen und innerhalb kurzer Einbrennzeiten erreicht. Daß hier ein überraschender Effekt vorliegt, zeigt sich vor allem im Hinblick auf die Vergleichsversuche V 1 bis V 3, bei denen besonders die Werte für die Schlagprüfung erheblich unter denjenigen gemäß der Erfindung liegen. Außerdem zeigen die erfindungsgemäßen Produkte auch einen besseren Glanz und Verlauf als die Vergleichsprodukte. Dies ist in erster Linie auf die Härterkomponente B) zurückzuführen.

Die gemäß Beispiel 8 ermittelten Werte zeigen zwar die für die an sich spröden Acrylharze übliche geringere Schlagprüfung, jedoch eine wider Erwarten ausgezeichnete Erichsentiefung. Zu beachten ist der überraschend hohe Wert für den Glanz. Dies ist vor allem auf die guten Verlaufseigenschaften, die gute Haftung und die vollständige Vernetzung durch die Acylurethane zurückzuführen.

Wie der Vergleichsversuch V 4 zeigt, hat die Vernetzungsreaktion bei den Härtungstemperaturen von 170 und 180°C - im Gegensatz zu Beispiel 8 - noch nicht eingesetzt, so daß alle mechanischen Eigenschaften von V 4 schlechter sind als diejenigen von Beispiel 8.

PATENTANSPRÜCHE:

1. Überzugsmittel in feiner Verteilung auf der Basis von
A) OH-Gruppen enthaltenden Oligomeren und/oder Polymeren und
B) verkappten Polyisocyanaten und gegebenenfalls weiteren üblichen Zusätzen, dadurch gekennzeichnet, daß die Komponente B) mindestens ein Acylurethan mit Gruppierungen der Formel $-CO-NH-CO-XR^1$ (I) enthält, worin
X Sauerstoff oder Stickstoff,
$R^1$, falls X Sauerstoff ist, Alkyl, Alkoxyalkyl, Hydroxyalkyl, Aryl, Aralkyl oder Cycloalkyl mit 1 bis 12, vorzugsweise 1 bis 8 C-Atomen in der Alkylgruppe und, falls X Stickstoff ist, der Rest $XR^1$ die Gruppierung

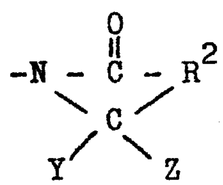

(II)

darstellt, worin
$R^2$ $C_{1-11}$-Alkylen, -Alkenylen, unsubstituiertes oder mit Alkyl substituiertes Phenylen mit bis zu 8 C-Atomen im Alkylrest,
Y und Z zusammen ein O-Atom bilden oder jeweils gleich oder verschieden sind und Wasserstoff oder $C_{1-5}$-Alkyl bedeuten, und
daß das Überzugsmittel in Pulverform oder in Form einer Dispersion vorliegt.

2. Überzugsmittel nach Anspruch 1, dadurch gekennzeichnet, daß es als weitere übliche Zusätze Katalysatoren, Pigmente, Füllstoffe, Verlaufmittel, Netzmittel, Glanzmittel, Stabilisatoren einzeln oder im Gemisch enthält.

3. Überzugsmittel nach Anspruch 1 oder 2, dadurch gekennzeichnet, daß die Komponente A) mindestens ein Oligomeres und/oder Polymeres der Gruppe Polyester, Polyacrylverbindungen und Polyepoxide enthält.

4. Überzugsmittel nach einem oder mehreren der Ansprüche 1 bis 3, dadurch gekennzeichnet, daß die Komponente B) eine Verbindung der Formel $R-(-CO-NH-CO-XR^1)_n$ (III) darstellt, worin
R den Kohlenwasserstoffrest einer gegebenenfalls α,ß-äthylenisch ungesättigten aliphatischen, araliphatischen oder carbocyclischen Polycarbonsäure mit 1 bis 20 C-Atomen, der gegebenenfalls Ester-, Ether, Thioether und/oder Amidgruppen enthalten kann, bedeutet,
X und $R^1$ die oben genannte Bedeutung haben und
n eine ganze Zahl von 2 bis 4, vorzugsweise 2 ist.

5. Überzugsmittel nach einem oder mehreren der Ansprüche 1 bis 4, dadurch gekennzeichnet, daß die Komponente B) einen Erweichungspunkt von 40 bis 240, vorzugsweise 80 bis 180°C hat.

6. Überzugsmittel nach einem oder mehreren der Ansprüche 1 bis 5, dadurch gekennzeichnet, daß das Verhältnis der OH-Gruppen der Komponente A) zu den Acylurethangruppen der Komponente B) (0,5 - 1,3) : 1 bis 1 : (0,5 - 1,3), vorzugsweise (0,8 - 1) : 1 bis 1 : (0,8 bis 1) beträgt.

7. Überzugsmittel nach einem oder mehreren der Ansprüche 1 bis 6, dadurch gekennzeichnet, daß es zusätzlich Benzoin und/oder dessen Alkylsubstitutionsprodukte in einem Anteil von 0,1 bis 10, vorzugsweise 0,2 bis 5, insbesondere 0,3 bis 3 Gew.-%, bezogen auf den Gesamtfestkörpergehalt der Mischung enthält.

8. Verwendung des Überzugsmittels nach einem oder mehreren der Ansprüche 1 bis 7, zur elektrostatischen Beschichtung, zur Beschichtung nach dem Walzverfahren (Coil-Coating) oder mittels elektrischer Tauchlackierung von Substraten aus Metall-, Holz, Kunststoffen oder Glas.

9. Verwendung nach Anspruch 8, dadurch gekennzeichnet, daß die aufgebrachte Beschichtung bei einer Temperatur von 140 bis 300, vorzugsweise 150-200, insbesondere 160 bis 180°C eingebrannt wird.

10. Verwendung nach Anspruch 8 oder 9, dadurch gekennzeichnet, daß Überzüge mit einer Schichtdicke von mindestens 5 µm hergestellt werden.

11. Verwendung nach einem oder mehreren der Ansprüche 8 bis 10 zum Beschichten von der Witterung ausgesetzten Gegenständen sowie als Decklacke und Grundierungen.

Patentansprüche Österreich:

1. Verfahren zur Herstellung von Überzugsmitteln in feiner Verteilung, dadurch gekennzeichnet, daß
   A) OH-Gruppen enthaltende Oligomere und/oder Polymere und
   B) verkappte Polyisocyanate, auf Basis mindestens eines Acrylurethans mit Gruppierungen der Formel $-CO-NH-CO-XR^1$ (I) worin
   X Sauerstoff oder Stickstoff,
   $R^1$, falls X Sauerstoff ist, Alkyl, Alkoxyalkyl, Hydroxyalkyl, Aryl, Aralkyl oder Cycloalkyl mit 1 bis 12, vorzugsweise 1 bis 8 C-Atomen in der Alkylgruppe und, falls X Stickstoff ist, der Rest $XR^1$ die Gruppierung

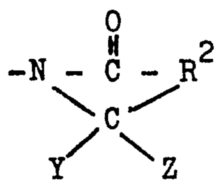

(II)

   darstellt, worin
   $R^2$ $C_{1-11}$-Alkylen, -Alkenylen, unsubstituiertes oder mit Alkyl substituiertes Phenylen mit bis zu 8 C-Atomen im Alkylrest,
   Y und Z zusammen ein O-Atom bilden oder jeweils gleich oder verschieden sind und Wasserstoff oder $C_{1-5}$-Alkyl bedeuten
   in Gegenwart oder Abwesenheit von weiteren üblichen Zusätzen vermischt und das Gemisch auf übliche Weise zu einem Pulver oder einer Dispersion zerkleinert werden.

2. Verfahren nach Anspruch 1, dadurch gekennzeichnet, daß als übliche Zusätze Katalysatoren, Pigmente, Füllstoffe, Verlaufmittel, Netzmittel, Glanzmittel, Stabilisatoren jeweils einzeln oder im Gemisch zugesetzt werden.

3. Verfahren nach Anspruch 1 oder 2, dadurch gekennzeichnet, daß zur Herstellung eines Pulvers das Gemisch in einem üblichen Extruder bei erhöhter Temperatur vermischt und extrudiert wird, worauf sich ein Mahlvorgang anschließt und nach Sieben ein Pulverlack mit einer Korngröße von weniger als 120 µm erhalten wird.

4. Verfahren nach Anspruch 1 oder 2, dadurch gekennzeichnet, daß zur Herstellung einer Dispersion das Gemisch gemahlen und in Wasser oder wasserlöslichen Bindemitteln zu einer Teilchengröße von 120 µm homogenisiert wird.

5. Verfahren nach einem oder mehreren der Ansprüche 1 bis 4, dadurch gekennzeichnet, daß die Komponente A) mindestens ein Oligomeres und/oder Polymeres der Gruppe Polyester, Polyacrylverbindungen und Polyepoxide enthält.

6. Verfahren nach einem oder mehreren der Ansprüche 1 bis 5, dadurch gekennzeichnet, daß die Komponente B) eine Verbindung der Formel $R\text{-}(\text{-CO-NH-CO-XR}^1)_n$ (III) darstellt, worin

R den Kohlenwasserstoffrest einer gegebenenfalls α,ß-äthylenisch ungesättigten aliphatischen, araliphatischen oder carbocyclischen Polycarbonsäure mit 1 bis 20 C-Atomen, der gegebenenfalls Ester-, Ether, Thioether und/oder Amidgruppen enthalten kann, bedeutet,

X und $R^1$ die oben genannte Bedeutung haben und

n eine ganze Zahl von 2 bis 4, vorzugsweise 2 ist.

7. Verfahren nach einem oder mehreren der Ansprüche 1 bis 6, dadurch gekennzeichnet, daß eine Komponente B) eingesetzt wird, die einen Erweichungspunkt von 40 bis 240, vorzugsweise 80 bis 180°C hat.

8. Verfahren nach einem oder mehreren der Ansprüche 1 bis 7, dadurch gekennzeichnet, daß das Verhältnis der OH-Gruppen der Komponente A) zu den Acylurethangruppen der Komponente B (0,5 - 1,3) : 1 bis 1 : (0,5 - 1,3), vorzugsweise (0,8 - 1) : 1 bis 1 : (0,8 bis 1) beträgt.

9. Verfahren nach einem oder mehreren der Ansprüche 1 bis 8, dadurch gekennzeichnet, daß zusätzlich Benzoin und/oder dessen Alkylsubstitutionsprodukte in einem Anteil von 0,1 bis 10, vorzugsweise 0,2 bis 5, insbesondere 0,3 bis 3 Gew.-%, bezogen auf den Gesamtfestkörpergehalt der Mischung eingesetzt werden.